Europäisches Patentamt

European Patent Office

Office européen des brevets

(11) Publication number: **0 217 234
B1**

# EUROPEAN PATENT SPECIFICATION

(45) Date of publication of the patent specification:
09.05.90

(51) Int. Cl.5: **D06F 37/20, F16F 7/08**

(21) Application number: **86112880.9**

(22) Date of filing: **18.09.86**

(54) Dampener device for laundry washing machine.

(30) Priority: **20.09.85 IT 4574485**

(43) Date of publication of application:
**08.04.87 Bulletin 87/15**

(45) Publication of the grant of the patent:
**09.05.90 Bulletin 90/19**

(84) Designated Contracting States:
**AT BE CH DE FR GB IT LI LU NL SE**

(56) References cited:
**CH-A- 448 625
DE-A- 1 585 595
DE-A- 2 238 595
DE-U- 8 508 931
FR-A- 1 167 999
FR-A- 1 257 027
GB-A- 935 566
GB-A- 1 162 807**

(73) Proprietor: **INDUSTRIE ZANUSSI S.p.A., Via Giardini Cattaneo 3, I-33170 Pordenone(IT)**

(72) Inventor: **Durazzani, Piero, Via Lazio 7, I-33080 Porcia (Pordenone)(IT)**

(74) Representative: **Patentanwälte Grünecker, Kinkeldey, Stockmair & Partner, Maximilianstrasse 58, D-8000 München 22(DE)**

## Description

The invention relates to a dampener device for the support from below of the tub and drum assembly of a laundry washing machine as set forth in the preamble of claim 1. Such a dampener device is known from DE-U 8 508 931.

The known dampener device is substantially composed of an elongate cylindrical rod reciprocatingly slidable in a corresponding generally cylindrical bushing, the lower end portion of which is hingedly connected to the base of the laundry washing machine by means of a pin, said rod being provided with braking surfaces cooperating with the corresponding internal surfaces of said bushing, and having its free end hingedly connected to a pin secured to the lower surface of the tub and drum assembly of the laundry washing machine.

Thanks to the friction of the braking surfaces of the rod on the generally cylindrical internal surface of the bushing, the sliding displacement of the rod within the bushing results in a braking action of constant magnitude and thus in a dampening of the oscillations of the tub and drum assembly.

In the known device, the bushing has end portions which are slightly frusto-conical so as to enlarge the internal diameter at the ends of the bushing with respect to the center portion thereof in order to facilitate the manufacture of the bushing. Said taper results in a difference of diameters of less than 0.1 mm. Hence, the braking action of this known dampener device is almost constant whatever is the stroke of the oscillations of the tub and drum assembly.

The constant braking action of this dampener device is capable of ensuring efficient dampening of the oscillations of the tub and drum assembly in the case of forces of determined magnitude, while being incapable of obtaining an effective dampening of the movement of this assembly in such cases in which it is subjected to forces of a greater magnitude due to the laundry charge within the drum being out of balance.

It is therefore the object of the present invention to provide a dampener device as set forth above which is capable of ensuring efficient dampening of the oscillations of the tub and drum assembly to a degree in proportion to the forces acting on this assembly.

This object is attained by the characterizing features of claim 1. Preferred embodiments of the invention which particularly permit said device to be mounted in the housing of a laundry washing machine in a simple and fully automatized manner are the subject matter of the dependent claims.

The characteristics of the invention will become more clearly evident from the following description, given by way of example with reference to the accompanying drawings, wherein:

fig. 1 shows a partially sectioned diagrammatical front view of a dampener device according to the invention as mounted in a laundry washing machine, and

fig. 2 shows an enlarged detail of the device of fig. 1 as a cross-section taken along the line A–A.

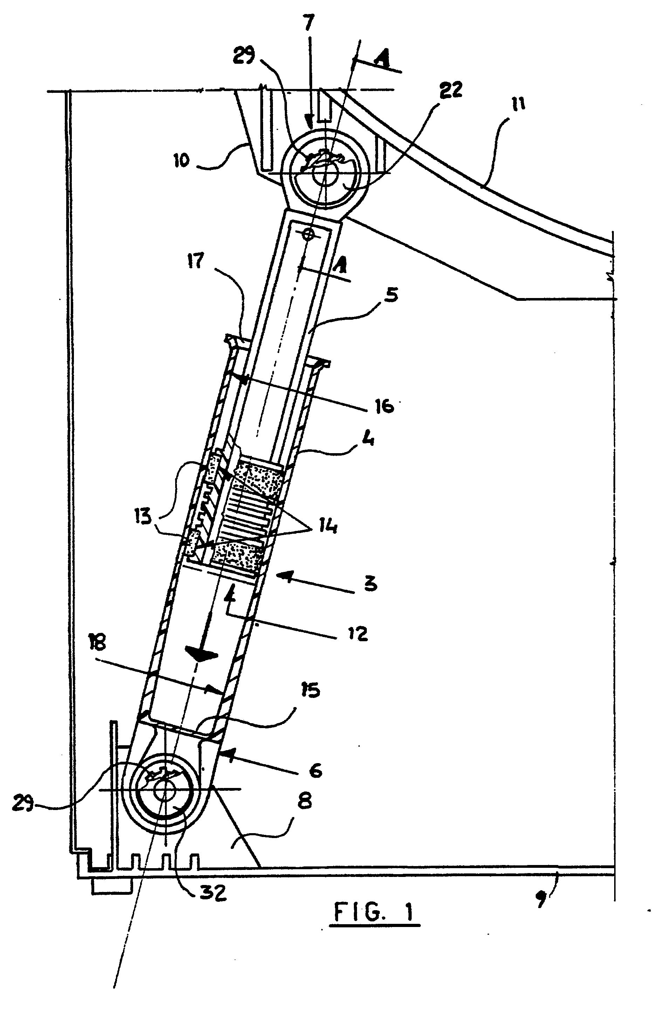

With reference to fig. 1, there is shown a dampener device 3 according to the invention for the support from below of the tub and drum assembly (not shown) of a laundry washing machine.

The dampener device shown is substantially composed of a cylindrical bushing 4 and an elongate rod 5 mounted for slidable reciprocation in bushing 4, both said bushing 4 and said rod 5 being preferably made of a plastics material and having their respective free ends 6 and 7 hingedly connected to corresponding mountings (not indicated) formed respectively on a mounting bracket 8 integrally formed with the base 9 of the housing of the machine of a plastics material, and on a circular collar 10 made of a plastics material and adapted to be fixedly secured to the outer periphery 11 of the tub of the washing machine.

At its other end 12, rod 5 is provided with annular braking surfaces 13 of a suitable low-friction material accommodated in corresponding seats 14 formed on the outer circumferential surface of rod 5, and cooperating with the internal surface of cylindrical bushing 4.

Cylindrical bushing 4 is designed to be separable from rod 5 and has one open end 17 for permitting rod 5 to be inserted thereinto for sliding displacement therein, the above mentioned other end 6 being closed by a bottom 15.

In particular according to the invention, the internal surface of cylindrical bushing 4 is formed with a first cylindrical portion 16 extending inwards from open end 17 of the bushing 4, and a second frusto-conical portion 18 extending from first portion 16 towards bottom 15 and converging towards bottom 15.

The purpose of internal surface portions 16 and 18 is to establish a braking action of constant and variable magnitude, respectively, during the sliding displacement of rod 5 within bushing 4 due to the friction between respective braking surfaces 13 and said surface portions in response to forces acting on the tub and drum assembly of the machine.

In practice, the described dampening device is dimensioned so as to permit the sliding displacement of rod 5 solely within cylindrical surface portion 16 of bushing 4 in response to forces of a determined maximum magnitude, so as to produce a braking action of a constant magnitude analogous to that obtained with a conventional dampener device, while permitting the displacement of the rod also along frusto-conical surface portion 18 of bushing 4 in response to forces of a greater magnitude than above which may be caused by the laundry within the drum being out of balance.

In the latter case, in particular, the sliding displacement results in a braking action of variable magnitude directly proportional to the forces acting on the tub and drum assembly so as to effectively dampen the oscillations of the tub and drum assembly.

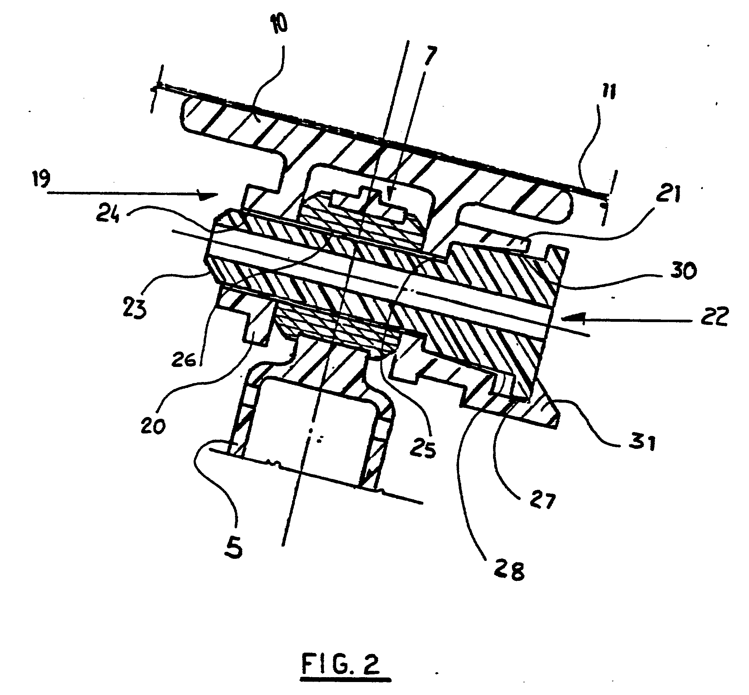

Shown in fig. 2 is the manner in which end portion 7 of rod 5 is hinged to circular collar 10.

To this purpose, collar 10 is provided with a mounting portion 19 comprising two flanges 20 and 21 projecting from the outer circumferential surface of the collar 10 at spaced positions and parallel to one another so as to permit end portion 7 to be inserted therebetween. For subsequently connecting end portion 7 to mounting portion 19, a pin 22 made of a plastics material and having a cylindrical shaft 23 is inserted into aligned bores 24, 25 and 26 formed respectively in flanges 21, 22 and in end portion 7.

Pin 22 is additionally formed with a circular head portion 27 having a greater diameter than shaft 23 and adapted to be laterally seated against flange 21. Head portion 27 is connected to shaft 23 by a frusto-conical intermediate portion 28 the diameter of which is smaller than that of head portion 27 and greater than that of shaft 23.

In particular, frusto-conical intermediate portion 28 is formed with a number of notches 29 (cf. fig. 1) evenly distributed about its circumferential surface, and adapted to be press-fitted into a circular seat 30 formed in flange 21.

In this manner, rod 5 can be rapidly hinged to circular collar 10 by the insertion of pin 22 as described above by means of a suitable tool acting on head portion 27 thereof, without the danger of dropping out thanks to the press-fit engagement of notches 29 with circular seat 30 and to the presence of a small retaining pawl 31 formed on flange 21 and adapted to be resiliently deformed on insertion of the pin so as to subsequently engage the outer end face of head portion 27 of pin 22.

Bushing 4 on its part is hinged to base 9 of the housing of the machine by means of a further pin 32 identical to pin 22, this further pin being press-fitted in the same manner as described above into corresponding bores formed in flange portions (not shown) of mounting bracket 8 and through end portion 6 of bushing 4.

In this manner, rod 5 and bushing 4 can be mounted in the laundry washing machine separately from one another, and subsequently brought into engagement with one another during assembly of the machine.

The advantages obtainable with the dampener device according to the invention are thus evident.

## Claims

1. A dampener device for the support from below of the tub and drum assembly of a laundry washing machine, said device comprising a cylindrical bushing (4) and an elongate rod (5) received in said bushing (4) for reciprocating displacement therein, said bushing (4) and said rod (5) having their respective free ends (6, 7) hingedly connected by means of at least one respective pin (22) to corresponding mounting portions (19) formed respectively in the base (9) of the housing of the machine and on a circular collar (10) made of a plastics material and adapted to be fixedly secured to the outer periphery (11) of the tub, said rod (5) being provided with braking surfaces (13) of a suitable low-friction material cooperating with the corresponding internal surface (16, 18) of said bushing (4), said cylindrical bushing (4) being separable from said rod (5), its internal surface being composed of a first cylindrical portion (16) and a second frusto-conical portion (18) connected thereto, characterised in that said cylindrical portion (16) is adapted to produce a braking action of constant magnitude on displacement of said rod (5) within said cylindrical portion (16) and in that the angle of taper of said frusto-conical portion (18) is selected so as to produce a braking action of a variable magnitude on displacement of said rod (5) within said frusto-conical portion (18) in response to increased forces acting on said tub and drum assembly and resulting in an increased stroke of displacement of said rod (5) within said bushing (4).

2. A dampener device according to claim 1, characterised in that each said mounting portion (19) includes at least two flange portions (20, 21) disposed parallel to one another at a transverse spacing for permitting the respective end portion (6, 7) of said bushing (4) and said rod (5) to be connected thereto by the insertion of a shaft portion (23) of said pin (22) through corresponding bores (24, 25; 26) formed in said flange portions (20, 21) and said end portion (6, 7).

3. A dampener device according to claim 2, characterised in that said pin (22) is also provided with a circular head portion (27) connected to said shaft portion (23) by a frusto-conical portion (28) the diameter of which is smaller than that of said head portion (27) and greater than that of said shaft portion (23), said frusto-conical portion (28) being formed with a number of circumferential notches (29) and adapted to be press-fitted into a corresponding circular seat (30) of a respective associated flange portion (21).

4. A dampener device according to claim 3, characterised in that said head portion (27) is adapted to cooperate with at least one resiliently deformable retaining pawl (31) provided on the respective associated flange portion (21).

## Patentansprüche

1. Dämpfungsvorrichtung für die Abstützung der Bottich- und Trommelanordnung einer Waschmaschine von unten, enthaltend eine zylindrische Büchse (4) und einen langgestreckten Stab (5), der von der Büchse (4) für die Hin- und Herbewegung darin aufgenommen ist, welche Büchse (4) und Stab (5) an ihren jeweiligen freien Enden (6, 7) gelenkig mittels wenigstens eines entsprechenden Stiftes (22) an entsprechenden Montageabschnitten (19) befestigt sind, die jeweils an der Basis (9) des Gehäuses der Maschine und an einem ringförmigen Kragen (10) aus Plastikmaterial befestigt sind, der dazu eingerichtet ist, fest am äußeren Umfang (11) des Bottichs angebracht zu werden, welcher Stab (5) mit Bremsflächen (13) aus geeignetem niedrig-reibendem Material versehen ist, die mit der entsprechenden Innenfläche (16, 18) der Büchse (4) zusammenwirken, welche zylindrische Büchse (4) von dem Stab (5) trennbar ist, wobei ihre Innenfläche aus einem ersten zylindrischen Abschnitt (16) und einem zweiten, damit verbundenen kegelstumpfförmigen Abschnitt (18) zusammengesetzt ist, dadurch gekennzeichnet, daß der genannte zylindrische Abschnitt (16) dazu eingerichtet ist, eine Bremswirkung konstanter Amplitude bei Verstellung des genannten Stabes (5) innerhalb des zylindrischen Abschnitts (16) hervorruft, und daß der Konizitätswinkel des kegelstumpfförmigen Abschnittes (18) derart gewählt ist, daß er eine Bremswirkung variabler Amplitude bei Verstellung des Stabes (5) innerhalb des kegelstumpfförmigen Abschnitts (18) in Abhängigkeit von gesteigerten Kräften hervorruft, die auf die Bottich- und Trommelanordnung einwirken und zu einem gesteigerten Verstellhub des Stabes (5) innerhalb der Büchse (4) führen.

2. Dämpfungsvorrichtung nach Anspruch 1, dadurch gekennzeichnet, daß jeder genannte Montageabschnitt (19) wenigstens zwei Flanschabschnitte (20, 21) enthält, die parallel zueinander mit Querabstand angeordnet sind, um den entsprechenden Endabschnitt (6, 7) der Büchse (4) und des Stabes (5) dazwischen durch Einsetzen eines Schaftabschnitts (23) des Stiftes (22) durch entsprechende Bohrungen (24, 25; 26) zu ermöglichen, die in den Flanschabschnitten (20, 21) und dem genannten Endabschnitt (6, 7) ausgebildet sind.

3. Dämpfungsvorrichtung nach Anspruch 2, dadurch gekennzeichnet, daß der genannte Stift (22) auch mit einem kreisförmigen Kopfabschnitt (27) versehen ist, der mit dem Schaftabschnitt (23) durch einen kegelstumpfförmigen Abschnitt (28) verbunden ist, dessen Durchmesser kleiner als der des Kopfabschnittes (27) und größer als der des Schaftabschnitts (23) ist, welcher kegelstumpfförmige Abschnitt (28) mit einer Anzahl von Umfangsnuten (29) versehen und dazu eingerichtet ist, den Preßsitz in einen entsprechenden kreisförmigen Sitz (30) eines entsprechenden, zugeordneten Flanschabschnitts (21) eingesetzt zu werden.

4. Dämpfungsvorrichtung nach Anspruch 3, dadurch gekennzeichnet, daß der Kopfabschnitt (27) dazu eingerichtet ist, mit wenigstens einer elastisch verformbaren Haltenase (31) zusammenzuwirken, die an dem entsprechenden zugehörigen Flanschabschnitt (21) vorgesehen ist.

**Revendications**

1. Amortisseur pour supporter par en dessous l'ensemble de cuve et de tambour d'une machine à laver le linge, cet amortisseur comprenant un manchon cylindrique (4) et une tige allongée (5) logée dans le manchon (4) pour s'y déplacer dans les deux sens, ce manchon (4) et cette tige (5) ayant leurs extrémités libres respectives (6, 7) articulées au moyen d'au moins une broche respective (22, 32) sur des portions de montage correspondantes (19) formées respectivement dans la base (9) du carter de la machine et sur un collier circulaire (10) en matière plastique adapté pour être monté sur la périphérie extérieure (11) de la cuve, cette tige (5) comportant des surfaces de freinage (13) en un matériau approprié à faible coefficient de frottement coopérant avec la surface interne correspondante (16, 18) du manchon (4), ce manchon cylindrique (4) pouvant être séparé de la tige (5), sa surface interne comprenant une première portion cylindrique (16) et une deuxième portion tronconique (18) raccordée à la première, caractérisé en ce que cette portion cylindrique (16) est adaptée pour produire une action de freinage de grandeur constante lors du déplacement de la tige (5) à l'intérieur de cette portion cylindrique (16) et en ce que l'angle de conicité de la portion tronconique (18) est choisi de façon à produire une action de freinage de grandeur variable lors du déplacement de la tige (5) à l'intérieur de cette portion tronconique (18) en réponse à des forces plus grandes agissant sur l'ensemble de cuve et de tambour et provoquant une course plus longue de la tige (5) à l'intérieur du manchon (4).

2. Amortisseur selon la revendication 1, caractérisé en ce que chaque portion de montage (19) comporte au moins deux portions de flasque (20, 21) parallèles l'une à l'autre en étant espacées transversalement l'une de l'autre pour permettre d'y monter la portion terminale respective (6, 7) du manchon (4) et de la tige (5) par l'introduction d'une portion de fût (23) de la broche (22) à travers des alésages correspondants (24, 25; 26) formés dans les portions de flasque (20, 21) et dans la portion terminale (6, 7).

3. Amortisseur selon la revendication 2, caractérisé en ce que la broche (22) comporte également une tête circulaire (27) se raccordant à la portion de fût (23) par une portion tronconique (28), dont le diamètre est plus petit que le diamètre de la tête (27) et plus grand que le diamètre de la portion de fût (23), cette portion tronconique (28) comportant un certain nombre de nervures circonférentielles (29) adaptées pour être logées de force dans un siège circulaire correspondant (30) d'une portion de flasque associée respective (21).

4. Amortisseur selon la revendication 3, caractérisé en ce que la tête (27) est adaptée pour coopérer avec au moins un cliquet de retenue élastiquement déformable (31) prévu sur la portion de flasque associée respective (21).

FIG. 1

FIG. 2